(19) Europäisches Patentamt
European Patent Office
Office européen des brevets

(11) **EP 2 148 213 A2**

(12) **EUROPÄISCHE PATENTANMELDUNG**

(43) Veröffentlichungstag:
**27.01.2010 Patentblatt 2010/04**

(51) Int Cl.:
**G01S 1/00** *(2006.01)*

(21) Anmeldenummer: **09100293.1**

(22) Anmeldetag: **26.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **21.07.2008 DE 102008040580**

(71) Anmelder: **Robert Bosch GmbH**
**70469 Stuttgart (DE)**

(72) Erfinder:
• **Friese, Michael**
**31171, Nordstemmen (DE)**
• **Vogel, Andreas**
**31139, Hildesheim (DE)**
• **Dederer, Rudolf**
**31134, Hildesheim (DE)**
• **Wolf, Karen Insa**
**30163, Hannover (DE)**

(54) **Vorrichtung und Verfahren zur Bestimmung einer Position**

(57) Verfahren zur Bestimmung einer Position mittels eines GNSS, welches die folgenden Schritte enthält: Empfang von Ephemeriden von mindestens einem Satelliten des GNSS; Speichern der empfangenen Ephemeriden; Vorausberechnen von Ephemeriden für einen vorgebbaren Zeitpunkt $Z_Z$ in der Zukunft aus den gespeicherten Ephemeriden, wobei zum Vorausberechnen von zukünftigen Ephemeriden aus den gespeicherten Ephemeriden nur gespeicherte Ephemeriden herangezogen werden, welche zu einem Zeitpunkt $Z_V$ gültig waren, für den gilt:

$$Z_V = Z_Z - n \cdot 24\text{h} \,,$$

wobei n ausgewählt ist aus 1, 2, 3, 4, 5, 6 und/oder 7.

Fig. 3

**Beschreibung**

Die Erfindung betrifft ein Verfahren und eine Vorrichtung zur Bestimmung einer Position mittels eines globalen Navigationssatellitensystems (GNSS), bei welchem zunächst Ephemeriden von mindestens einem Satelliten empfangen und die empfangenen Ephemeriden gespeichert werden. Danach werden Ephemeriden für einen vorgebbaren Zeitpunkt in der Zukunft mit Hilfe der gespeicherten Ephemeriden vorausberechnet.

Zur Bestimmung einer Position mittels eines solchen Verfahrens wird die Laufzeit der von Satelliten ausgesandten Signale gemessen. Aus dieser Laufzeitmessung kann der Abstand zwischen dem Empfänger und dem sendenden Satelliten bestimmt werden. Zusätzlich muss der Ort des Satelliten im Raum bekannt sein, um mithilfe mehrerer Satellitensignale eine Position auf der Erdoberfläche oder im erdnahen Bereich zu bestimmen. Parameter zur Berechnung der aktuellen Satellitenpositionen werden zusammen mit Uhrkorrekturen und weiteren Daten in einem Datensatz, den Ephemeriden, bereitgestellt.

Verfahren und Vorrichtungen der eingangs benannten Art werden insbesondere dazu verwendet, in Navigationssystemen, bereits kurz nach dem Einschalten des Empfangsgeräts eine gültige Positionsangabe bereitzustellen, ehe aktualisierte Ephemeriden von zumindest einem Navigationssatelliten empfangen wurden.

Aus der US 2006/0224317 A1 ist bekannt, vierzehn der fünfzehn in den Ephemeriden enthaltenden Bahnparameter unter Berücksichtigung des periodischen Einflusses des Mondes und der Sonne zu extrapolieren, wenn mindestens vier Stützstellen vorliegen. Der verbleibende Parameter wird entweder linear oder nach einem Polynomansatz extrapoliert. Damit stehen zu einem späteren Zeitpunkt Ephemeridendaten zur Navigation zur Verfügung, auch wenn zu diesem Zeitpunkt keine Ephemeriden empfangbar sind. Dies kann insbesondere einen Zeitpunkt nach dem Einschalten des Navigationsgeräts betreffen, noch ehe aktualisierte Ephemeridendaten empfangen wurden. Weiterhin erlauben die extrapolierten Ephemeridendaten die Bestimmung einer Position, wenn das Satellitensignal gestört ist, sodass zwar die Laufzeit, nicht aber die Ephemeriden bestimmt werden können.

Nachteilig an dem vorgeschlagenen Verfahren zur Extrapolation der Bahnparameter ist jedoch, dass verbleibende Variationen für viele Anwendungsbereiche eine nicht ausreichende Genauigkeit ergeben. Daher liegt der Erfindung die Aufgabe zugrunde, ein Verfahren und eine Vorrichtung zur Erhöhung der Genauigkeit der Positionsbestimmung in einem Zeitraum mit unvollständigem Empfang gültiger Ephemeriden anzugeben.

Die Aufgabe wird erfindungsgemäß gelöst durch ein Verfahren zur Bestimmung einer Position mittels eines GNSS, welches die folgenden Schritte enthält: Empfang von Ephemeriden von mindestens einem Satelliten des GNSS, Speichern der empfangenen Ephemeriden und Vorausberechnen von Ephemeriden für einen vorgebbaren Zeitpunkt $Z_Z$ in der Zukunft, wobei zum Vorausberechnen von zukünftigen Ephemeriden aus den gespeicherten Ephemeriden nur gespeicherte Ephemeriden herangezogen werden, welche zu einem Zeitpunkt $Z_V$ gültig waren, für den gilt:

$$Z_V = Z_Z - n \cdot 24\text{h} \ ,$$

wobei n ausgewählt ist aus 1, 2, 3, 4, 5, 6, 7 und/oder höhere, ganzzahlige Vielfache.

Weiterhin besteht die Lösung der Aufgabe in einer Vorrichtung zur Bestimmung einer Position mittels eines GNSS, enthaltend mindestens einen Empfänger, mit welchem Ephemeriden von mindestens einem Satelliten des GNSS empfangbar sind, eine erste Speichereinrichtung zum Speichern der empfangenen Ephemeriden, Vorausberechnungsmittel zum Vorausberechnen von Ephemeriden aus den gespeicherten Ephemeriden für einen vorgebbaren Zeitpunkt $Z_Z$ in der Zukunft und Auswahlmittel, mit welchem zum Vorausberechnen von zukünftigen Ephemeriden aus den gespeicherten Ephemeriden nur gespeicherte Ephemeriden ausgewählt werden, welche zu einem Zeitpunkt $Z_V$ gültig waren, für den gilt:

$$Z_V = Z_Z - n \cdot 24\text{h} \ ,$$

wobei n ausgewählt ist, aus 1, 2, 3, 4, 5, 6, 7 und/oder höhere, ganzzahlige Vielfache.

Erfindungsgemäß werden ein Verfahren und eine Vorrichtung vorgeschlagen, mit welchem eine Position, d. h. ein Standort auf der Erdoberfläche bestimmt werden kann. Weiterhin kann die erfindungsgemäße Vorrichtung und das erfindungsgemäße Verfahren dazu verwendet werden, eine Position in einem erdnahen Bereich zu bestimmen, beispielsweise die Position eines Flugzeugs. Die Position kann dabei beispielsweise in UTM-Koordinaten, mittels eines Längen- und eines Breitengrades oder in einem anderen, bekannten Format angegeben werden. Die so ermittelte Position kann beispielsweise dem Benutzer über ein Display visualisiert werden. Weiterhin kann die Position in einem Speicher abgelegt und/oder weiterverarbeitet und/oder über eine Schnittstelle auf ein Computersystem übertragen werden.

Zur Ermittlung der Position stehen in einem globalen Navigationssatellitensystem (GNSS) Satellitensignale zur Verfügung, welche von einer Empfangseinrichtung empfangen werden. Dabei bestimmt die Empfangseinrichtung in an sich bekannter Weise die Laufzeit des Satellitensignals vom Sender zum Empfänger. Aus dieser Laufzeit kann der Abstand zum Sender ermittelt werden. Sofern die Position des Senders bekannt ist, beispielsweise aus Bahndaten des sendenden Satelliten, kann durch Kombination mehrerer Satellitensignale, welche von verschiedenen Satelliten ausgehen, eine Position auf der Erdoberfläche oder im erdnahen Bereich ermittelt werden.

Unter Ephemeriden im Sinne der vorliegenden Erfindung werden die Bahndaten der Satelliten verstanden. Die Bahndaten können beispielsweise in Form von 6 Kepler-Parametern und gegebenenfalls in Form von Korrekturfaktoren zu den Kepler-Parametern angegeben werden.

Die Bahnen der Satelliten unterliegen ständigen Schwankungen, beispielsweise durch das unregelmäßige Schwerefeld der Erde, variierenden Gravitationseinfluss von Sonne und Mond oder dem Strahlungsdruck der Sonne. Daher werden die Bahndaten durch die Bodenstation in regelmäßigen Abständen aktualisiert und auf das Satellitensignal moduliert, sodass die Bahndaten dem Empfänger nach Empfang und Demodulation des Satellitensignals zur Verfügung stehen. Die Ephemeriden sind i.d.R. für einen Zeitraum von $\pm$ 2 h bezogen auf ihren Referenzzeitpunkt gültig und können dann zur Berechnung der jeweils aktuellen Satellitenposition verwendet werden. Fallweise können die Ephemeriden ganz oder teilweise auch über eine andere Schnittstelle zum Empfänger der Satellitensignale übertragen werden, beispielsweise über ein GSM-Netz oder eine andere Funkschnittstelle.

Sofern keine aktuell gültigenn Ephemeriden zur Verfügung stehen, können die zum Empfangszeitpunkt eines Satellitensignals gültigen Ephemeriden aus historischen Daten extrapoliert werden. Erfindungsgemäß wurde nun erkannt, dass die Satellitenbahn aufgrund des unregelmäßigen Schwerefelds der Erde eine zyklische Variation aufweist, welche sich nach etwa 24 Stunden nahezu wiederholt. Dies ist darin begründet, dass die Satelliten des NAVSTAR-GPS-Systems eine Umlaufzeit von etwa zwölf Stunden haben. In dieser Zeit hat sich die Erde jedoch erst zur Hälfte unter den Satelliten gedreht, sodass die relative Position eines bestimmten Satelliten und der Erde sich erst nach dem zweiten Umlauf des Satelliten, d.h. nach 24 Stunden wieder einstellt. Daher kann die Genauigkeit der Extrapolation verbessert werden, wenn zur Extrapolation lediglich Daten herangezogen werden, bei welchem der Satellit einem ähnlichen Einfluss durch das Schwerefeld ausgesetzt ist.

Um zu beliebigen Zeitpunkten eine Position bestimmen zu können, können die Ephemeriden zu regelmäßigen Zeitpunkten extrapoliert und in einem Speicher abgelegt werden. Die gespeicherten Ephemeriden können dann ebenso wie empfangene Ephemeriden zur Positionsberechnung verwendet werden. Die Vorausberechnung kann beispielsweise für Zeitpunkte erfolgen, welche etwa zehn bis etwa 75 Minuten auseinander liegen.

In einer weiteren Ausführungsform der Erfindung kann die Extrapolation der Ephemeriden auch direkt für den erforderlichen Zeitpunkt erfolgen, zu welchem eine Position bestimmt werden soll. In vorteilhafter Weise wird dazu weniger Speicherplatz benötigt, da keine extrapolierten Ephemeriden vorgehalten werden, sondern nur die bereits empfangenen Ephemeriden.

Bevorzugt werden die vorausberechneten Ephemeriden aus den gespeicherten Ephemeriden der letzten ein bis sieben Tage bestimmt. Besonders bevorzugt ist die Berechnung aus den bereits empfangenen Ephemeriden der letzten fünf Tage oder der letzten vier Tage.

Nachfolgend soll die Erfindung anhand eines Ausführungsbeispiels und Figuren ohne Beschränkung des allgemeinen Erfindungsgedankens näher erläutert werden.

Figur 1    zeigt die Variation eines Parameters der Ephemeriden über 182 Tage.

Figur 2    zeigt die Variation eines Parameters der Ephemeriden über sechs Tage.

Figur 3    zeigt die Auswahl der Stützstellen aus der Datenbasis vergangener Ephemeriden anhand eines Beispiels.

Die Erfindung wird nachfolgend anhand des derzeit im Betrieb befindlichen NAVSTAR-GPS-Systems beschrieben. Dem Fachmann ist dabei selbstverständlich geläufig, dass die Erfindung auch im Zusammenhang mit anderen globalen Navigationssatellitensystemen verwendbar ist, wie beispielsweise GLONAS, Compass oder Galileo.

Im NAVSTAR-GPS-System umfassen die Ephemeriden für die Berechnung der Satellitenposition die folgenden 15 Parameter, bezogen auf die Referenzepoche die Wurzel der großen Halbachse der Bahnellipse, Exzentrizität, Amplitude der Sinuskorrektur des Bahnradius, Amplitude der Cosinuskorrektur des Bahnradius, Abweichung in der mittleren Bahnbewegung, Amplitude der Sinuskorrektur der Breite, Amplitude der Cosinuskorrektur der Breite, Amplitude der Sinuskorrektur der Inklination, Amplitude der Cosinuskorrektur der Inklination, Inklination, zeitliche Änderung der Inklination, Winkel des Perigäums und die mittlere Anomalie, sowie die geographische Länge des aufsteigenden Knotens zum Startzeitpunkt der jeweiligen GPS-Woche und die zeitliche Änderung der Länge des aufsteigenden Knotens. Außerdem sind die Referenzepoche und die Referenznummer der GPS-Woche, sowie drei Parameter zur Korrektur der Satellitenuhr angegeben

Erfindungsgemäß wird vorgeschlagen, diese Daten während des Betriebs des GPS-Empfängers zumindest teilweise für zumindest einige Satelliten in einer Datenbank abzulegen. Die Datenbank umfasst dabei bevorzugt die Daten der letzten vier Tage, besonders bevorzugt die Daten der letzten fünf Tage oder die Daten der letzten sieben Tage.

Im NAVSTAR-GPS-System werden die Ephemeridendaten eines jeden Satelliten von dem Satelliten gesendet, welchen sie betreffen. Die gesendeten Daten werden dabei alle zwei Stunden aktualisiert und betreffen stets einen Zeitraum von zwei Stunden vor dem Referenzzeitpunkt bis zwei Stunden nach dem Referenzzeitpunkt, wobei der Referenzzeitpunkt in etwa dem Ausgabezeitpunkt entspricht. Somit ist es ausreichend, die Ephemeridendaten alle vier Stunden in der Datenbank abzulegen. Innerhalb des Gültigkeitszeitraumes (von i. d. R. 4 Stunden) der Ephemeriden können die Ephemeriden der Stützstellen, die für die Extrapolation verwendet werden, auf den jeweils notwendigen Zeitpunkt ohne Genauigkeitsverlust angepasst werden. Dies entspricht der sonst üblichen Verwendung der Ephemeriden innerhalb ihres Gültigkeitszeitraumes.

Ausgehend von den gespeicherten Daten können zukünftige Ephemeriden oder zumindest Teile davon in an sich bekannter Weise berechnet werden. Dabei werden aus der Datenbank jedoch nur Eingangswerte für die Berechnung ausgewählt, welche zu einem Zeitpunkt gültig waren, welcher ausgehend vom Zeitpunkt der Extrapolation 24, 48, 72, 96, 120, 144 oder 168 Stunden zurück liegt. Dadurch wird sichergestellt, dass die Einwirkung des Schwerefelds der Erde auf die Satellitenbahn zum Zeitpunkt der Extrapolation ähnlich ist. Dadurch wird der Fehler der extrapolierten Ephemeriden wunschgemäß verringert.

In der Extrapolationsberechnung werden die ausgewählten (gültigen) Ephemeriden auf den genauen Zeitpunkt angepasst. Dies entspricht der sonst üblichen Verwendung der Ephemeriden innerhalb ihres Gültigkeitszeitraumes. Zur Extrapolation werden folgende an sich bekannte Verfahren in Abhängigkeit der Anzahl Stützstellen eingesetzt: Beibehaltung der Ephemeriden (bei 1 Stützstelle), lineare Fortsetzung (bei 2 Stützstellen), periodische Fortsetzung (bei 3 Stützstellen unter Berücksichtung der Steigung zwischen den Stützstellen und bei 4 oder mehr Stützstellen). Bei der periodischen Fortsetzung mit 4 oder mehr Stützstellen kann nach dem aus der US 2006/0224317 A1 bekannten Verfahren vorgegangen werden. Die Stützstellen können auch Lücken von 1 oder 2 Tagen aufweisen.

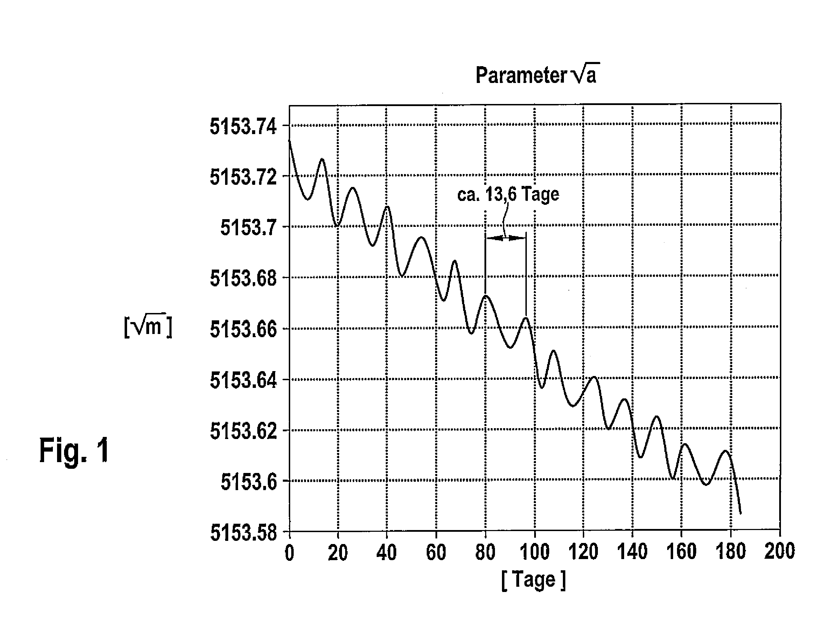

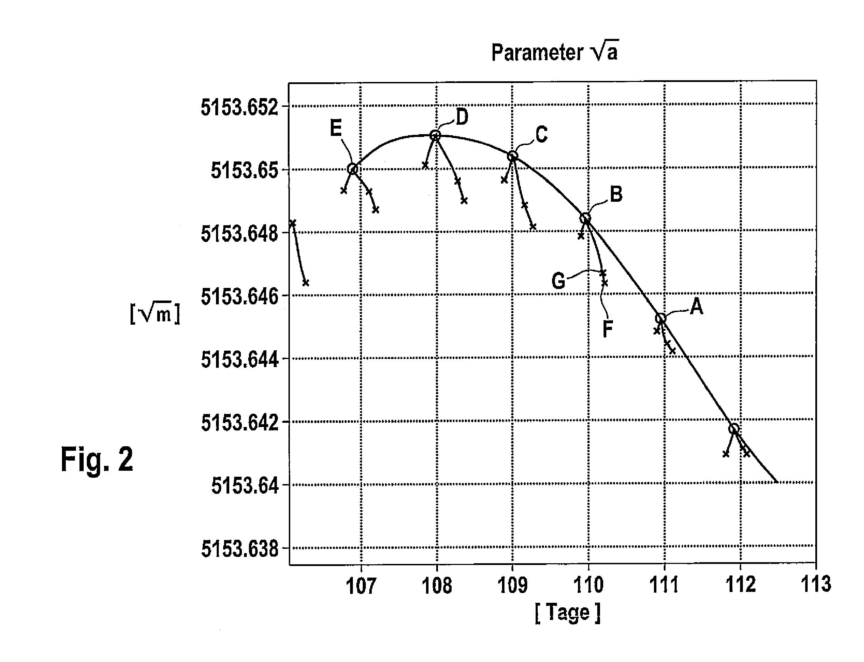

Figur 1 und 2 zeigen das erfindungsgemäße Verfahren beispielhaft anhand eines Parameters der Ephemeriden, nämlich der Wurzel der großen Halbachse der Satellitenbahn $\sqrt{a}$. Das Verfahren ist sinngemäß auf andere Parameter der Ephemeriden anwendbar.

Figur 1 zeigt Messwerte des Parameters $\sqrt{a}$ in der Einheit $\sqrt{}$ gegen die Zeit in Tagen. Erkennbar ist, dass die Länge der großen Halbachse der Satellitenbahn im Verlauf eines halben Jahres kontinuierlich abnimmt. Diese Abnahme ist auf eine periodische Veränderung des Parameters aufgrund der Änderung der relativen Position zur Sonne zurückzuführen. Weiterhin zeigt der Parameter eine periodische Änderung mit einer Periodizität von ca. 13,6 Tagen. Diese Oszillation ist auf den Gravitationseinfluss des Mondes zurückzuführen, welcher die Erde in etwa 13,6 Tagen zur Hälfte umrundet.

Figur 2 zeigt einen Ausschnitt aus den Daten der Figur 1 für sechs Tage. Dabei sind für jeden Tag vier vom Satelliten gesendete Werte des Parameters $\sqrt{a}$ eingetragen. Diese Werte wurden vom Kontrollzentrum für den jeweiligen Satelliten berechnet und vom Satelliten als Ephemeridendaten während des Überflugs gesendet.

Aus Figur 2 ist ersichtlich, dass der Parameter eine weitere Periodizität zeigt, welche im Tagesverlauf variiert. Soll nun beispielsweise der Wert A aus den empfangenen Daten der letzten vier Tage extrapoliert werden, so wurde erfindungsgemäß erkannt, dass sich die größte Genauigkeit bei einer Extrapolation aus den Werten B, C, D und E ergibt. Intuitiv würde jedoch eine erhöhte Genauigkeit erwartet, sofern auch die an sich neueren Daten F und G in die Berechnung einbezogen würden. Wie aus Figur 2 jedoch ersichtlich ist, würde die Berücksichtigung dieser neueren Daten den extrapolierten Wert für den Parameter $\sqrt{a}$ verschlechtern.

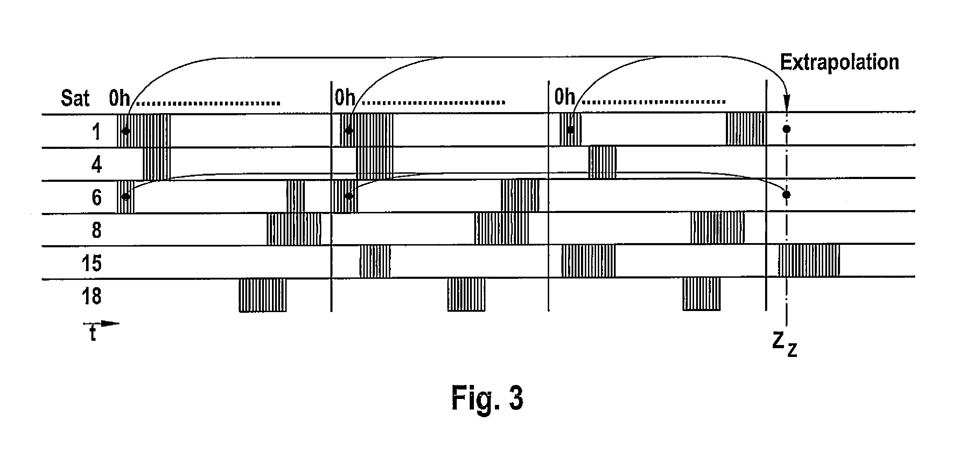

Figur 3 zeigt nochmals schematisch die Auswahl der Stützstellen zur Extrapolation der Ephemeridendaten. Dabei ist entlang der x-Achse die Zeit fortlaufend aufgetragen. Das Ende eines jeden Tages ist durch eine senkrechte schwarze Linie markiert.

In sechs übereinander liegenden Zeilen sind Daten für sechs beispielhaft ausgewählte Satelliten abgelegt. Innerhalb der grau markierten Zeiträume wurden vom jeweiligen Satelliten Ephemeriden empfangen und in einem Speicher abgelegt. Zum Zeitpunkt $Z_Z$ soll nun aus gemessenen Signallaufzeiten der Satelliten 1, 6 und 15 eine Position berechnet werden. Hierzu müssen zusätzlich zu den Signallaufzeiten auch die Ephemeriden bekannt sein, d.h. die Position der sendenden Satelliten im Raum. Gemäß dem erfindungsgemäß vorgeschlagenen Verfahren werden diejenigen gespeicherten Daten zur Extrapolation der Ephemeriden ausgewählt, welche zu den Zeitpunkten gültig waren, welche dem Zeitpunkt $Z_Z$ 24 Stunden oder ganzzahligen Vielfachen davon vorausgehen. Dies sind für den Satellit Nr. 1 die drei markierten Zeitpunkte 24 Stunden, 48 Stunden und 72 Stunden vor dem Zeitpunkt $Z_Z$. Die letzten vom Satelliten 1 vor dem Zeitpunkt $Z_Z$ gespeicherten Daten wurden bei einer anderen Konstellation gegenüber dem Schwerefeld der Erde ermittelt und werden daher nicht verwendet.

In gleicher Weise werden vom Satellit Nr. 6 diejenigen Daten ausgewählt, welche dem Zeitpunkt $Z_Z$ 48 und 72 Stunden voraus gehen. Die jeweils in den Abendstunden desselben Tages gemessenen Ephemeriden werden bei der Extrapolation nicht verwendet. Für den Satellit Nr. 15 ist schließlich keine Extrapolation erforderlich, da bereits aktualisierte Ephemeridendaten für diesen Satelliten empfangen wurden.

Mit den ausgewählten historischen Ephemeriden können nun in an sich bekannter Weise aktualisierte Ephemeriden berechnet werden, mit welchen dann eine Position bestimmt werden kann, ehe Ephemeriden von den jeweiligen Satelliten empfangen wurden.

Das erfindungsgemäß vorgeschlagene Verfahren

und die erfindungsgemäße Vorrichtung kann beispielsweise in einem transportablen GPS-Empfänger eingesetzt werden. Dieser kann beispielsweise Bestandteil eines Navigationsgeräts oder einer Einrichtung zur Mauterfassung sein.

In einer weiteren Ausführungsform der Erfindung kann die Extrapolation der Ephemeriden auch auf einem zentralen Server durchgeführt werden. Dieser Server kann dann extrapolierte Ephemeriden an ein Navigationsgerät oder eine Einrichtung zur Mauterfassung weiterleiten, beispielsweise über eine drahtlose Schnittstelle. Die drahtlose Schnittstelle kann dabei mittels eines proprietären Funkkanals realisiert werden oder Bestandteil eines anderen bestehenden Datennetzes sein. Insbesondere kommt hierfür ein UMTS- oder ein GSM-Netz in Betracht.

Dem Fachmann ist selbstverständlich geläufig, dass die Erfindung nicht auf die dargestellten Ausführungsbeispiele beschränkt ist. Vielmehr können bei der Umsetzung der Erfindung Modifikationen und Änderungen vorgenommen werden, ohne die Erfindung an sich wesentlich zu verändern. Die vorstehende Beschreibung ist daher nicht als beschränkend, sondern als erläuternd anzusehen.

**Patentansprüche**

1. Verfahren zur Bestimmung einer Position mittels eines GNSS, welches die folgenden Schritte enthält:

   - Empfang von Ephemeriden von mindestens einem Satelliten des GNSS;
   - Speichern der empfangenen Ephemeriden;
   - Vorausberechnen von Ephemeriden für einen vorgebbaren Zeitpunkt $Z_Z$ in der Zukunft aus den gespeicherten Ephemeriden;
   **dadurch gekennzeichnet, dass**
   - zum Vorausberechnen von zukünftigen Ephemeriden aus den gespeicherten Ephemeriden nur gespeicherte Ephemeriden herangezogen werden, welche zu einem Zeitpunkt $Z_V$ gültig waren, für den gilt:

   $$Z_V = Z_Z - n \cdot 24\text{h} \text{ ,}$$

   wobei n mindestens eine ganze Zahl ist.

2. Verfahren nach Anspruch 1, **dadurch gekennzeichnet, dass** zum vorgebbaren Zeitpunkt $Z_Z$ die Laufzeit mehrerer Satellitensignale bestimmt wird und eine Position zumindest aus den vorausberechneten Ephemeriden und den Laufzeiten der Satellitensignale berechnet wird.

3. Verfahren nach Anspruch 1, **dadurch gekenn-** zeichnet, dass Ephemeriden für eine Vielzahl von vorgebbaren Zeitpunkten $Z_Z$ vorausberechnet werden, welche eine vorgebbare Zeitspanne auseinanderliegen.

4. Verfahren nach Anspruch 3, **dadurch gekennzeichnet, dass** die Zeitpunkte $Z_Z$ etwa 10 bis etwa 75 Minuten auseinander liegen.

5. Verfahren nach einem der Ansprüche 1 bis 4, **dadurch gekennzeichnet, dass** zum Vorausberechnen von zukünftigen Ephemeriden aus den gespeicherten Ephemeriden die gespeicherten Ephemeriden auf einen einheitlichen Referenzzeitpunkt transformiert werden.

6. Verfahren nach einem der Ansprüche 1 bis 5, **dadurch gekennzeichnet, dass** n ausgewählt ist aus 1, 2, 3, 4, 5, 6 und/oder 7.

7. Vorrichtung zur Bestimmung einer Position mittels eines GNSS, enthaltend:

   - Mindestens einen Empfänger, mit welchem Ephemeriden von mindestens einem Satelliten des GNSS empfangbar sind;
   - Eine erste Speichereinrichtung zum Speichern der empfangenen Ephemeriden;
   - Vorausberechnungsmittel zum Vorausberechnen von Ephemeriden für einen vorgebbaren Zeitpunkt $Z_Z$ in der Zukunft aus den gespeicherten Ephemeriden;
   **dadurch gekennzeichnet, dass**
   - Auswahlmittel vorhanden sind, mit welchen zum Vorausberechnen von zukünftigen Ephemeriden aus den gespeicherten Ephemeriden nur gespeicherte Ephemeriden ausgewählt werden, welche zu einem Zeitpunkt $Z_V$ gültig waren, für den gilt:

   $$Z_V = Z_Z - n \cdot 24\text{h} \text{ ,}$$

   wobei n mindestens eine ganze Zahl ist.

8. Vorrichtung nach Anspruch 7, **dadurch gekennzeichnet, dass** weiterhin eine zweite Speichereinrichtung vorhanden ist, mit welcher vorausberechnete Ephemeriden für eine Vielzahl von vorgebbaren Zeitpunkten $Z_Z$ speicherbar sind, welche eine vorgebbare Zeitspanne auseinanderliegen.

9. Mauterfassungssystem mit einer Vorrichtung nach einem der Ansprüche 7 oder 8

10. Computerprogramm zu Durchführung eines Verfahren nach einem der Ansprüche 1 bis 6, wenn das Computerprogramm auf einem Computer ausgeführt wird.

11. Computerprogramm mit Programmcode, der auf einem maschinenlesbaren Träger gespeichert ist, zur
Durchführung des Verfahrens nach einem der Ansprüche 1 bis 6, wenn das Computerprogramm auf
einem Computer ausgeführt wird.

Fig. 1

Parameter √a

Fig. 2

EP 2 148 213 A2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060224317 A1